(19) Europäisches Patentamt
European Patent Office
Office européen des brevets

(11) **EP 4 250 023 A1**

(12) **EUROPEAN PATENT APPLICATION**
published in accordance with Art. 153(4) EPC

(43) Date of publication:
**27.09.2023 Bulletin 2023/39**

(21) Application number: **21899906.8**

(22) Date of filing: **24.11.2021**

(51) International Patent Classification (IPC):
**G05B 17/02** *(2006.01)*

(52) Cooperative Patent Classification (CPC):
**G05B 17/02**

(86) International application number:
**PCT/CN2021/132662**

(87) International publication number:
**WO 2022/116873 (09.06.2022 Gazette 2022/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2020 CN 202011408608**

(71) Applicant: **Huawei Technologies Co., Ltd.
Shenzhen, Guangdong 518129 (CN)**

(72) Inventors:
• **KONG, Hongwei
  Shenzhen, Guangdong 518129 (CN)**
• **CHEN, Changhui
  Shenzhen, Guangdong 518129 (CN)**
• **WANG, Wenjie
  Shenzhen, Guangdong 518129 (CN)**

(74) Representative: **Gill Jennings & Every LLP
The Broadgate Tower
20 Primrose Street
London EC2A 2ES (GB)**

(54) **SIMULATION TEST METHOD, APPARATUS AND SYSTEM**

(57)     Embodiments of this application provide a simulation test method, apparatus, and system, and relate to the simulation test field. The method includes: obtaining a processing delay of each virtual sensor; determining whether each processing delay meets a preset condition; if any processing delay meets the preset condition, predicting a first driving state based on the processing delay to obtain a second driving state; and performing emulation based on each second driving state by using a virtual sensor corresponding to the processing delay, to obtain one or more first input signals, where each first input signal is in a one-to-one correspondence with each virtual sensor; sending the one or more first input signals to a sensor emulator. According to the method provided in embodiments of this application, behavior and performance of a sensor can be accurately simulated, accuracy of sensor simulation can be improved, and simulation test efficiency can be improved.

FIG. 2

## Description

This application claims priority to Chinese Patent Application No. 202011408608.X, filed with the China National Intellectual Property Administration on December 3, 2020 and entitled "SIMULATION TEST METHOD, APPARATUS, AND SYSTEM", which is incorporated herein by reference in its entirety.

## TECHNICAL FIELD

Embodiments of this application relate to the simulation test field, and in particular, to a simulation test method, apparatus, and system.

## BACKGROUND

Assisted driving and autonomous driving technologies are developing rapidly and commercialized. The use of the assisted driving and autonomous driving technologies will greatly change people's transportation modes and have great impact on people's work and life lifestyle. By using assisted driving and autonomous driving, a sensing capability of a sensor on a vehicle and an autonomous driving capability of the vehicle are critical to safe driving in various scenarios. Related capabilities need to be tested in various scenarios to ensure that the capabilities are reliable. Current test manners usually include an open road driving test, a closed field driving test, and a simulation test. It is difficult to traverse various test scenarios based on a road driving test mode. Analysis shows that more than 100 million kilometers of road tests are required to ensure coverage of various scenarios, but efficiency is relatively low. In addition, due to safety considerations, it is difficult to reproduce an extreme dangerous scenario test in a field test. However, a pure simulation test, such as Carcraft of Waymo, cannot test a sensing capability of a sensor, capabilities of a frame and a power system, and collaboration between the capabilities of the frame and the power system and an autonomous driving algorithm. Therefore, consistency between the simulation test and a road test cannot be effectively ensured.

## SUMMARY

Embodiments of this application provide a simulation test method, apparatus, and system, to provide a manner of performing a simulation test in a virtual scenario.

According to a first aspect, an embodiment of this application provides a simulation test method, applied to an input signal emulator. The input signal emulator is located in an autonomous driving test architecture, the autonomous driving test architecture further includes a virtual scenario emulator and a sensor emulator, the virtual scenario emulator is configured to emulate a virtual scenario, the virtual scenario includes a to-be-tested virtual object, the to-be-tested virtual object includes a first driving state and a plurality of virtual sensors, and the method includes:

A processing delay of each virtual sensor is obtained. Specifically, the processing delay may be a difference between a processing time of the virtual sensor in an emulator and a processing time of a real sensor in a real environment.

Whether each processing delay meets a preset condition is determined. Specifically, the processing delay may be a positive value, or may be a negative value. For example, if the processing time of the virtual sensor in the emulator is greater than the processing time of the real sensor in the real environment, the processing delay is a positive value; or if the processing time of the virtual sensor in the emulator is less than the processing time of the real sensor in the real environment, the processing delay is a negative value. Therefore, whether the processing delay meets the preset condition may be determined by determining whether the processing delay is a positive value or a negative value. Each virtual sensor corresponds to a preset frontend model and a preset algorithm of the virtual sensor. Therefore, the virtual sensor includes a processing delay of the virtual sensor. That is, it needs to determine whether the processing delay of each virtual sensor meets the preset condition.

If any processing delay meets the preset condition, the first driving state is predicted based on the processing delay to obtain a second driving state. Specifically, the first driving state may include a location, a speed, and an acceleration of the to-be-tested virtual object. Therefore, when a processing delay of any virtual sensor meets a preset condition, for example, the processing delay of the virtual sensor is a positive value, prediction may be performed based on the processing delay of the virtual sensor to obtain the second driving state. The second driving state is a prediction state of the virtual sensor, and the second driving state compries a location, a speed, and an acceleration at a future moment.

Emulation is performed based on each second driving state by using a virtual sensor corresponding to the processing delay, to obtain one or more first input signals. Each first input signal is in a one-to-one correspondence with each virtual sensor. Specifically, the input signal emulator may perform emulation based on a second driving state of each virtual sensor, to obtain the first input signal.

The one or more first input signals are sent to the sensor emulator.

In this embodiment, the processing delay of the virtual sensor is determined, and delay compensation is performed on the processing delay, so that behavior and performance of the sensor can be accurately simulated, accuracy of sensor simulation is improved, and simulation test efficiency is improved.

In a possible implementation, that emulation is performed by using a virtual sensor corresponding to the processing delay, to obtain one or more first input signals includes:

Synchronous emulation is performed by using the plurality of virtual sensors that separately correspond to the processing delays, to obtain the plurality of first input signals. Specifically, when the plurality of virtual sensors perform emulation at the same time to obtain the first input signals, the signal obtained through emulation by each virtual sensor may be synchronized, to obtain the plurality of synchronized first input signals. In this way, the signals may be synchronized, thereby improving simulation test accuracy.

In this embodiment, by synchronizing the first input signals, simulation test accuracy can be improved.

In a possible implementation, the processing delay is determined by a difference between a first processing time and a second processing time. The first processing time is a processing time of the virtual sensor in the sensor emulator, and the second processing time is a preset real processing time of a real sensor corresponding to the virtual sensor.

In this embodiment, the difference between the processing time of the virtual sensor in the sensor emulator and the preset real processing time of the real sensor is used as the processing delay, so that performance of the real sensor can be accurately simulated.

In a possible implementation, the method includes:

If any processing delay does not meet the preset condition, emulation is performed based on the first driving state by using the virtual sensor corresponding to the processing delay, to obtain a second input signal; and sending of one or more second input signals to the sensor emulator based on the processing delay is delayed. Specifically, if the processing delay of the virtual sensor does not meet the preset condition, for example, if the processing delay is a negative value, that is, the virtual sensor does not obtain a second prediction state, the input signal emulator may perform emulation based on the first driving state to obtain the second input signal, and sending of the second input signal is delayed based on the processing delay, to compensate for the processing delay.

In this embodiment, the processing delay may be compensated by delaying the sending of the second input signal, so that performance of the real sensor can be accurately simulated.

In a possible implementation, the sensor emulator is configured to receive the first input signal or the second input signal, and perform calculation based on a preset frontend model and a preset algorithm of the virtual sensor to obtain an output signal. The preset frontend model of the virtual sensor is Y=G*X+N+I, where Y is the output signal of the frontend model, X is the first input signal or the second input signal, G is a gain of a frontend of the virtual sensor, N is a noise of the frontend of the virtual sensor, and I is interference introduced by the frontend of the virtual sensor.

In this embodiment, the preset frontend model and the preset algorithm are set in the virtual sensor, so that emulation is performed on the real sensor, and performance of the real sensor can be more accurately simulated.

In a possible implementation, the virtual scenario is obtained through emulation by the virtual scenario emulator by using at least one CPU and/or at least one GPU, and the first input signal or the second input signal is obtained through emulation by the input signal emulator according to a ray tracing algorithm at least one GPU according to a ray tracing algorithm.

In this embodiment, emulation is performed on a signal by using a hardware unit such as the at least one CPU and/or the at least one GPU, to increase a speed of signal emulation, thereby improving simulation test efficiency.

In a possible implementation, the first driving state includes a first location, a first speed, and a first acceleration of the to-be-tested virtual object at a moment t, and that the first driving state is predicted based on the processing delay to obtain a second driving state includes:

The first driving state of the to-be-tested virtual object is predicted based on the processing delay by using a Kalman filtering method, to obtain the second driving state. The second driving state includes a second location, a second speed, and a second acceleration of the to-be-tested virtual object at t+T, and T is the processing delay.

In this embodiment, the processing delay can be effectively compensated by performing predicting on the location, the speed, and the acceleration at the future moment, so that simulation test accuracy can be improved.

In a possible implementation, the autonomous driving test architecture further includes a digital emulator, a driving system, and a power system emulator. The digital emulator is configured to receive an output signal sent by the sensor emulator, and send the output signal to the driving system; the driving system is configured to determine a driving decision based on the output signal; and the power system emulator is configured to perform emulation on the driving decision to obtain a third driving state, and feed back the third driving state to the virtual scenario emulator, to enable the to-be-tested virtual object to update the first driving state based on the third driving state.

In this embodiment, the driving decision can be obtained based on the output signal by introducing the digital emulator, the driving system, and the power system emulator, and a driving state of the to-be-tested virtual object can be updated based on the driving decision. Therefore, a closed loop of a simulation test is formed, and simulation test efficiency can be improved.

In a possible implementation, the virtual sensor includes at least one of a millimeter wave radar virtual sensor, a laser radar virtual sensor, an infrared virtual sensor, or a camera virtual sensor.

In this embodiment, simulation tests may be performed on different sensors by introducing the plurality of virtual sensors, so that test flexibility can be improved, and simulation test efficiency can be further improved.

According to a second aspect, an embodiment of this application provides a simulation test apparatus, applied to an input signal emulator. The input signal emulator is located in an autonomous driving test architecture, the autonomous driving test architecture further includes a virtual scenario emulator and a sensor emulator, the virtual scenario emulator is configured to emulate a virtual scenario, the virtual scenario includes a to-be-tested virtual object, the to-be-tested virtual object includes a first driving state and a plurality of virtual sensors, and the apparatus includes:

a receiving circuit, configured to obtain a processing delay of each virtual sensor;
a prediction circuit, configured to: determine whether each processing delay meets a preset condition; and if any processing delay meets the preset condition, predict the first driving state based on the processing delay to obtain a second driving state;
a first emulation circuit, configured to perform emulation based on each second driving state by using a virtual sensor corresponding to the processing delay, to obtain one or more first input signals, where each first input signal is in a one-to-one correspondence with each virtual sensor; and
a first sending circuit, configured to send the one or more first input signals to the sensor emulator.

In a possible implementation, the first emulation circuit is further configured to perform synchronous emulation by using the plurality of virtual sensors that separately correspond to the processing delays, to obtain the plurality of first input signals.

In a possible implementation, the processing delay is determined by a difference between a first processing time and a second processing time. The first processing time is a processing time of the virtual sensor in the sensor emulator, and the second processing time is a preset real processing time of a real sensor corresponding to the virtual sensor.

In a possible implementation, the apparatus further includes:

a second emulation circuit, configured to: if any processing delay does not meet the preset condition, perform emulation based on the first driving state by using the virtual sensor corresponding to the processing delay, to obtain a second input signal; and
a second sending circuit, configured to delay the sending of one or more second input signals to the sensor emulator based on the processing delay.

In a possible implementation, the first input signal or the second input signal is obtained through emulation by the input signal emulator according to a ray tracing algorithm at least one GPU according to a ray tracing algorithm.

In a possible implementation, the first driving state includes a first location, a first speed, and a first acceleration of the to-be-tested virtual object at a moment t, and the prediction circuit is further configured to predict the first driving state of the to-be-tested virtual object based on the processing delay by using a Kalman filtering method, to obtain the second driving state. The second driving state includes a second location, a second speed, and a second acceleration of the to-be-tested virtual object at t+T, and T is the processing delay.

According to a third aspect, an embodiment of this application provides a simulation test system, including: a virtual scenario emulator, an input signal emulator, a sensor emulator, a digital emulator, and a system synchronization module.

The virtual scenario emulator is configured to emulate a virtual scenario, the virtual scenario includes a to-be-tested virtual object, and the to-be-tested virtual object includes a first driving state and a plurality of virtual sensors

The input signal emulator is configured to: obtain a processing delay of each virtual sensor; determine whether each processing delay meets a preset condition; if any processing delay meets the preset condition, predict the first driving state based on the processing delay to obtain a second driving state; perform emulation based on each second driving state by using a virtual sensor corresponding to the processing delay, to obtain one or more first input signals, where each first input signal is in a one-to-one correspondence with each virtual sensor; and send the one or more first input signals to the sensor emulator.

The sensor emulator is configured to: receive the first input signal, and perform calculation based on a preset frontend model and a preset algorithm of the virtual sensor to obtain an output signal.

The digital emulator is configured to receive the output signal sent by the sensor emulator.

The system synchronization module is configured to provide a synchronization clock for each of the virtual scenario emulator, the input signal emulator, the sensor emulator, and the digital emulator

In a possible implementation, the input signal emulator is further configured to perform synchronous emulation by using the plurality of virtual sensors that separately correspond to the processing delays, to obtain the plurality of first input signals.

In a possible implementation, the processing delay is determined by a difference between a first processing time and a second processing time. The first processing time is a processing time of the virtual sensor in the sensor emulator, and the second processing time is a preset real processing time of a real sensor corresponding to the virtual sensor.

In a possible implementation, the input signal emulator is further configured to: if any processing delay does not meet the preset condition, perform emulation based on the first driving state by using the virtual sensor corresponding to the processing delay, to obtain a second input signal; and delay the sending of one or more second input signals to the sensor emulator based on the processing delay.

In a possible implementation, the sensor emulator is further configured to receive the second input signal. A preset frontend model of the virtual sensor is Y=G*X+N+I, where Y is an output signal of the frontend model, X is the first input signal or the second input signal, G is a gain of a frontend of the virtual sensor, N is a noise of the frontend of the virtual sensor, and I is interference introduced by the frontend of the virtual sensor.

In a possible implementation, the virtual scenario is obtained through emulation by the virtual scenario emulator by using at least one CPU and/or at least one GPU, and the first input signal or the second input signal is obtained through emulation by the input signal emulator according to a ray tracing algorithm at least one GPU according to a ray tracing algorithm.

In a possible implementation, the first driving state includes a first location, a first speed, and a first acceleration of the to-be-tested virtual object at a moment t, and the input signal emulator is further configured to predict the first driving state of the to-be-tested virtual object based on the processing delay by using a Kalman filtering method, to obtain the second driving state. The second driving state includes a second location, a second speed, and a second acceleration of the to-be-tested virtual object at t+T, and T is the processing delay.

In a possible implementation, the system further includes a driving system and a power system emulator.

The digital emulator is further configured to send the output signal to the driving system.

The driving system is configured to determine a driving decision based on the output signal.

The power system emulator is configured to perform emulation on the driving decision to obtain a third driving state, and feed back the third driving state to the virtual scenario emulator, to enable the to-be-tested virtual object to update the first driving state based on the third driving state.

In a possible implementation, the virtual sensor includes at least one of a millimeter wave radar virtual sensor, a laser radar virtual sensor, an infrared virtual sensor, or a camera virtual sensor.

According to a fourth aspect, an embodiment of this application provides a computer-readable storage medium. The computer-readable storage medium stores a computer program, and when the computer program runs on a computer, the computer is enabled to perform the method according to the first aspect.

According to a fifth aspect, an embodiment of this application provides a computer program. When the computer program is executed by a computer, the computer program is used to perform the method according to the first aspect.

In a possible design, all or some of the programs in the fifth aspect may be stored in a storage medium that is encapsulated with the processor, or some or all of the programs may be stored in a memory that is not encapsulated with the processor

## BRIEF DESCRIPTION OF DRAWINGS

FIG. 1 is a schematic diagram of a system architecture according to an embodiment of this application;
FIG. 2 is a schematic flowchart of a simulation test method according to an embodiment of this application;
FIG. 3 is a schematic diagram of status prediction according to an embodiment of this application;
FIG. 4 is a schematic diagram of a structure of a simulation test apparatus according to an embodiment of this application; and
FIG. 5 is a schematic diagram of a structure of an electronic device according to an embodiment of this application.

## DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The terms "first" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the descriptions of embodiments of this application, unless otherwise specified, "a plurality of" means two or more than two.

Currently, to improve efficiency of an assisted driving test and an autonomous driving test, and improve consistency between a simulation test and a road test, a hardware closed-loop solution that can emulate various scenarios in a laboratory and perform a joint test on a sensor capability and capabilities of a frame and a power system of a test vehicle by using autonomous driving software and an algorithm is required. Scenario emulation in the laboratory can be performed in an emulation interface-based manner and a digital interface-based manner. In the emulation interface-based manner, an emulation signal received by each sensor is generated through scenario emulation, and the signal is sent to each sensor through the emulation interface. Problems that a system is complex and the solution is immature exist when the emulation interface manner is used. For example, in an emulated scenario, a plurality of target radar echoes can emulate only a few targets. This cannot meet a requirement. However, a system using a probe wall solution to emulate dozens of target echoes is quite expensive and complex, and there is no mature solution. Moreover, there is no solution for LiDAR echo signals of a plurality of targets in the emulated scenario. Therefore, a scenario emulation manner of a digital interface is generally used. In this emulation manner, a generated scenario emulation signal is directly sent to a processing system of assisted driving and autonomous driving through the digital interface, without passing through an actual sensor. A common solution is to establish a behavior model or a statistical model of each sensor to emulate performance impact of the sensor. In this manner, synchronous emulation of multi-sensor behavior in a same scenario cannot be implemented. In addition, performance of the sensor in a specific scenario cannot be accurately described based on the behavior or statistical model. There is also a solution that proposes use of a physical model in combination with a sensor algorithm to emulate sensor performance in a specific scenario. However, this solution does not consider performance impact of an emulation frontend of the sensor. In addition, synchronization and a delay between a plurality of sensor emulation signals are not considered. Fusion of a plurality of sensors in autonomous driving requires that perception of different sensors for a same scenario can be synchronously emulated during scenario emulation. In addition, to ensure that a hardware closed-loop system is consistent with actual road test behavior, an extra delay generated in scenario emulation needs to be able to be compensated for in a scenario emulation system.

In view of the foregoing problem, embodiments of this application provide a simulation test method. The method can effectively resolve a delay problem caused by a simulation sensor in a digital scenario simulation test, and therefore behavior and performance of a plurality of sensors can be accurately and synchronously simulated in a digital scenario emulator.

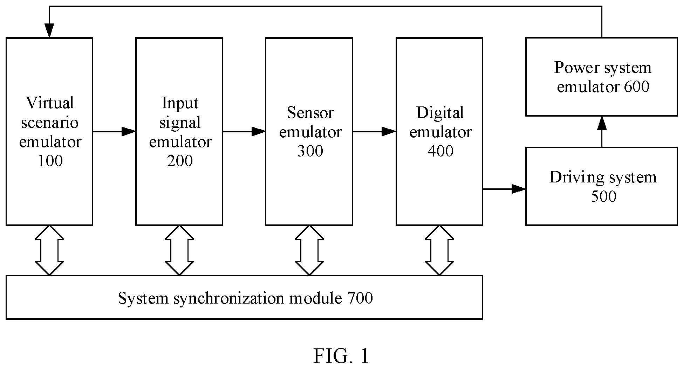

With reference to FIG. 1 to FIG. 3, a simulation test method provided in an embodiment of this application is described. FIG. 1 shows a system architecture provided in this embodiment of this application. Refer to FIG. 1. The system architecture includes a virtual scenario emulator 100, an input signal emulator 200, a sensor emulator 300, a digital emulator 400, an assisted driving and autonomous driving system 500 (for ease of description, the "assisted driving and autonomous driving system" is referred to as a "driving system" below), a power system emulator 600, and a system synchronization module 700.

The virtual scenario emulator 100 is configured to construct a virtual scenario, and send virtual scenario information to the input signal emulator 200. During specific implementation, the virtual scenario emulator 100 may be a computer, or may be a computing device of another type. This is not limited in this application. The virtual scenario emulator 100 may include a high-speed Ethernet network adapter that supports the IEEE 1588 protocol, one or more central processing units (Central Processing Units, CPUs), or a graphics processing unit (Graphics Processing Unit, GPU), to ensure real-time performance of emulation. Construction of the virtual scenario may be implemented by using scenario emulation software installed in the virtual scenario emulator 100. The scenario emulation software may be commercial 3D emulation software, or may be open-source 3D emulation software. This is not specifically limited in this embodiment of this application.

The virtual scenario may include a virtual scenario established by using a virtual three-dimensional model. The virtual three-dimensional model emulates a real object in the real world. For example, the real object may include a vehicle, a person, an animal, a tree, a road, a building, or the like, or may include another real object. This is not specifically limited in this embodiment of this application. It may be understood that the three-dimensional model may be considered as a virtual object. During specific implementation, a user usually creates a virtual object in the virtual scenario, and uses the virtual object as a test object for testing. Therefore, the test object may be a first virtual object, and all virtual objects except the first virtual object in the virtual scenario may be considered as second virtual objects. For example, the first virtual object may be a vehicle, and therefore autonomous driving and assisted driving performance of the vehicle may be tested. For example, in a traveling process of the vehicle, a second virtual object around the vehicle causes an obstacle to the vehicle, consequently affecting traveling of the vehicle, and further affecting driving decisions of the vehicle, for example, accelerating, decelerating, turning, and stopping. By using the foregoing scenario emulation software, the virtual scenario emulator 100 may send information about the virtual object in the virtual scenario to the input signal emulator 200. The information about the virtual object may include information such as coordinates, a material, and illumination of the virtual object. A standardized interface is used for information transmission between the virtual scenario emulator 100 and the input signal emulator 200, to ensure that the foregoing system architecture does not depend on specific scenario emulation software.

It may be understood that the first virtual object may alternatively be an unmanned aerial vehicle or an autonomous driving device of another type. This is not specifically limited in this embodiment of this application.

In addition, for each real object, when signals such as visible light, a millimeter wave radar, a laser radar, and an infrared radar are irradiated on a surface of the real object, physical phenomena such as reflection, scattering, and diffraction occur. Therefore, the virtual scenario emulator 100 may establish a corresponding physical model for the virtual obj ect based on the physical phenomena. In addition, the virtual scenario emulator 100 may further establish a model parameter corresponding to the material of the virtual object. The material of the virtual object is consistent with a material used by the real object.

To test the first virtual object, the virtual scenario emulator 100 may further arrange a virtual sensor on the first virtual object. The virtual sensor is configured to emulate obtaining an input signal in a virtual environment. Input signals obtained by various virtual sensors in the virtual environment can be emulated by using the physical model and the model parameter.

The input signal emulator 200 is configured to emulate an input signal obtained by various virtual sensors in the virtual environment, and send the input signal to the sensor emulator 300 for processing. The input signal may be emulated based on a driving state of the first virtual object and the virtual scenario information. The virtual sensor may include a millimeter wave radar virtual sensor, a laser radar virtual sensor, an infrared virtual sensor, and a camera virtual sensor, or may include a virtual sensor of another type. This is not specifically limited in this embodiment of this application. During specific implementation, the input signal emulator 200 may be a computer, or may be a computing device of another type. This is not specifically limited in this application. The input signal emulator 200 may include a high-speed Ethernet network adapter that supports the IEEE1588 protocol and one or more GPUs. In addition, an emulation process of obtaining the input signal may be implemented by using input signal emulation software. It may be understood that, in the input signal emulation software, a format, a type, and a related parameter of the virtual sensor may be configured, the information about the virtual object and a material parameter of a related virtual object that are sent from the virtual scenario emulator 100 are received, and emulation is performed on different types of virtual sensors based on the driving state (for example, a location, a speed, and an acceleration of the first virtual object), the physical model, and the model parameter of the first virtual object according to a ray tracing algorithm. For example, emulation calculation (for example, including but not limited to effect such as reflection, scattering, and diffraction) is performed on physical effect that occurs on a surface of the virtual object by each real sensor, so that the input signal in the virtual environment may be obtained through emulation. For example, a transmitter of the virtual sensor transmits a signal, and after physical effect occurs between the transmitted signal and the surface of the virtual object, the transmitted signal is returned to a receiver of the virtual sensor, to obtain the input signal of the virtual sensor. In addition, the foregoing GPU may process emulation of the foregoing input signal, to ensure real time of emulation. For example, the input signal emulator 200 may emulate shooting an image in the virtual environment by using a virtual camera, or emulate detecting a virtual object in the virtual environment by using a millimeter wave radar.

The sensor emulator 300 is configured to emulate behavior and performance of each virtual sensor. For example, the sensor emulator 300 may receive the input signal obtained by the input signal emulator 200, and process the input signal in a processing manner of emulating a real sensor, so that an output signal can be obtained, and the output signal may be sent to the digital emulator 400 for processing. During specific implementation, the sensor emulator 300 may be a computer, or may be a computing device of another type. This is not specifically limited in this application. The sensor emulator 300 may include a high-speed Ethernet network adapter that supports the IEEE 1588 protocol, one or more field programmable gate array (Field Programmable Gate Array, FPGA) acceleration cards, or a GPU. For example, the sensor emulator 300 may emulate performance of a frontend of each virtual sensor and an algorithm of each virtual sensor. Emulation of the performance of the frontend of each virtual sensor may be performed in a modeling manner. For example, a model of the frontend of each virtual sensor may be pre-constructed as follows: Y=G*X+N+I, where X is an input signal of the sensor, Y is an output signal of the frontend of the sensor, G is a gain of the frontend of the sensor, N is a noise of the frontend of the sensor, and I is interference introduced by the frontend of the sensor. The output signal Y may be obtained through processing by using a preset algorithm of the virtual sensor.

It may be understood that the model of the frontend of the virtual sensor is constructed based on the real sensor. Therefore, emulation is performed on the frontend of the real sensor by using the virtual sensor in a modeling manner, so that it may be ensured that performance of the frontend of the virtual sensor is consistent with that of a frontend of the real sensor in terms of statistical characteristics.

In addition, the algorithm of the virtual sensor may be performed by directly using an algorithm of the real sensor. This is not described herein again. For algorithms of different real sensors, the sensor emulator 300 may perform emulation by using a corresponding FPGA acceleration card or GPU card, to ensure a real-time requirement and a computing capability requirement of emulation.

The digital emulator 400 is configured to receive the output signal sent by the sensor emulator 300, and may send the output signal to the driving system 500. During specific implementation, the digital emulator 400 may be a computer, or may be a computing device of another type. This is not specifically limited in this application. The digital emulator 400 may include a high-speed Ethernet network adapter that supports the IEEE 1588 protocol, one or more FPGA acceleration cards, and a plurality of interfaces.

The interfaces include a physical interface and a digital interface between the digital emulator 400 and the real sensor. The digital emulator 400 may use the physical interface and the digital interface to receive real data collected by different real sensors, and perform a test by replaying the real collected data. The physical interface may include but is not limited to a controller local area network (Controller Area Network, CAN) interface, a mobile industry processor interface (Mobile Industry Processor Interface, MIPI), an Ethernet (Ethernet) interface, a gigabit multimedia serial link (Gigabit Multimedia Serial Link, GSML) interface, a flat panel display link (FPDLink-Flat Panel Display Link, FPLINK) interface, a local interconnect network (Local Interconnect Network, LIN) interface, a 100M-T1 interface, and the like. The digital interface may include but is not limited to a peripheral component interconnect express (Peripheral Component Interconnect Express, PCIE) interface, a serial advanced technology attachment (Serial Advanced Technology Attachment, SATA) interface, a high-speed Ethernet interface, a digital fiber interface, and the like.

In addition, the interface may further include a physical interface between the digital emulator 400 and the driving system 500, and a digital interface between the digital emulator 400 and the power system emulator 600. The physical interface may include the CAN interface. For example, the digital emulator 400 may be connected to a CAN bus of the driving system 500 through the CAN interface, so that the digital emulator 400 can send an output signal to the driving system 500, and the driving system 500 can perform driving decision based on the output signal. The digital interface may include the Ethernet interface, and the Ethernet interface is configured to transmit a driving state of a to-be-tested object (for example, a vehicle) that is output by the power system emulator 600.

The driving system 500 is configured to receive the output signal sent by the digital emulator 400, and perform driving decision based on the output signal. The driving system 500 may be located in a real to-be-tested object. For example, the driving system 500 may be located inside a real to-be-tested vehicle. In this case, the vehicle is used as the to-be-tested object. It may be understood that the driving system 500 may also be separately tested. For example, the driving system 500 may be taken out of a real vehicle, and therefore the driving system 500 may be used as a to-be-tested object. In addition, the driving decision may include operations such as acceleration, braking, decelerating, and turning, or may include another operation. This is not specifically limited in this embodiment. Then, the driving system 500 may send the driving decision to the power system emulator 600, so that the power system emulator 600 may perform emulation based on the driving decision, to update driving states of the real to-be-tested object and the virtual object.

The power system emulator 600 is configured to receive the driving decision sent by the driving system 500, emulate a dynamic characteristic of the real vehicle based on the driving decision, output a driving state corresponding to the real vehicle, and feed back the driving state to the first virtual obj ect in the virtual scenario, so that the first virtual object can be updated based on the driving state, and an emulation test can be completed. During specific implementation, the power system emulator 600 may be a computer, or may be a computing device of another type. This is not specifically limited in this application. The power system emulator 600 may include a plurality of interfaces. The interface may include a physical interface (for example, a CAN interface) between the power system emulator 600 and the driving system 500, and a digital interface (for example, an Ethernet interface) between the power system emulator 600 and a virtual scenario simulator. The power system emulator 600 may receive, through the physical interface, the driving decision sent by the driving system 500, and the power system emulator 600 may send a real vehicle status to the first virtual object in the virtual scenario through the digital interface.

The system synchronization module 700 is configured to provide a synchronization clock for each of the virtual scenario emulator 100, the input signal emulator 200, the sensor emulator 300, and the digital emulator 400, to ensure clock synchronization between the virtual scenario emulator 100, the input signal emulator 200, the sensor emulator 300, and the digital emulator 400. During specific implementation, the system synchronization module 700 may be, for example, a high-speed Ethernet switch that supports the 1588 synchronization protocol, or may be a special-purpose synchronization module. This is not specifically limited in this embodiment of this application.

It may be understood that, the virtual scenario emulator 100, the input signal emulator 200, the sensor emulator 300, and the digital emulator 400 may exchange data with each other by using the high-speed Ethernet switch or another high-speed data connection device.

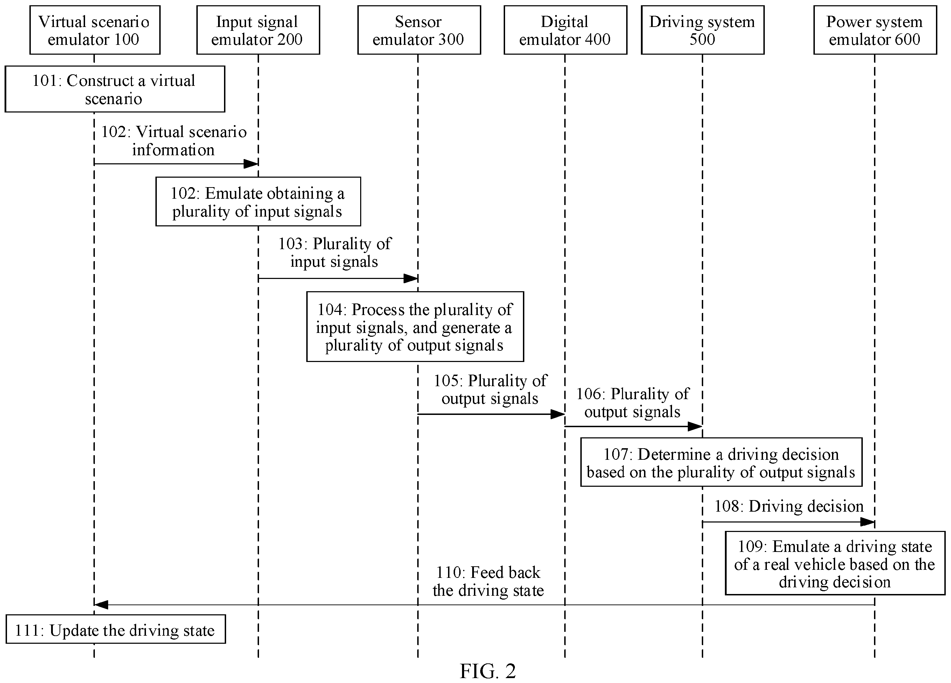

FIG. 2 is a schematic flowchart of an embodiment of a simulation test method according to an embodiment of this application. The method includes the following steps.

Step 101: Construct a virtual scenario by using the virtual scenario emulator 100.

Specifically, the virtual scenario may be constructed by using the virtual scenario emulator 100. The virtual scenario may include a to-be-tested scenario, and the to-be-tested scenario may include a virtual object and a material corresponding to the virtual object. For example, the virtual object may include a vehicle, a person, an animal, a tree, a road, a building, or the like, or may include another object. This is not specifically limited in this embodiment of this application. In addition, a to-be-tested virtual object may further be determined in the virtual scenario. For example, the to-be-tested virtual object may be a vehicle.

To perform an emulation test on the virtual object, a plurality of virtual sensors may be further configured on the virtual object. Therefore, a first parameter of the virtual sensor may be configured by using the input signal emulator 200, to emulate obtaining of an input signal by the virtual sensor. When first parameters of the plurality of virtual sensors are configured, configured first parameter information may include: a quantity of sensors, a type of the sensor, an assembly parameter of the sensor on a real vehicle (for example, an installation height and an angle of the sensor on the real vehicle), and a physical parameter of the sensor (for example, a quantity, a location, and a direction of antennas transmitted and received by a millimeter wave radar, a frequency, a working manner, and a quantity of lines of a laser radar, and a field of view and a focal length of a camera).

It may be understood that, in the constructed virtual scenario, the to-be-tested virtual object may be considered as a first virtual object, and all virtual objects except the first virtual object in the virtual scenario are considered as second virtual objects. For example, if a vehicle in the virtual scenario is used as the first virtual object, that is, the to-be-tested virtual object, another virtual object (for example, a vehicle, a person, an animal, a tree, a road, or a building) may be used as the second virtual object.

It should be noted that, in addition to configuring the parameters related to the virtual scenario and the virtual object, a second parameter of the virtual sensor may also be configured in the sensor emulator 300. When second parameters of the plurality of virtual sensors are configured, configured second parameter information may include: a quantity of sensors, a type of the sensor, a frontend parameter (for example, a frontend gain G, a frontend noise N, and interference I introduced by a frontend) of the sensor, a sensor processing delay, a sensor algorithm, and the like.

Step 102: The virtual scenario emulator 100 sends virtual scenario information to the input signal emulator 200.

Specifically, the virtual scenario information may include related information of all virtual objects in the virtual scenario, and the related information may include a coordinate location, material information (for example, plastic or metal), an illumination condition, and the like. This is not specifically limited in this embodiment of this application.

Step 103: The input signal emulator 200 emulates obtaining a plurality of input signals of the first virtual object.

Specifically, when the first virtual object moves in the virtual scenario, the plurality of input signals around the first virtual object may be obtained through emulation in the input signal emulator 200 by using the virtual sensor. The virtual sensor may include one or more of a millimeter wave radar virtual sensor, a laser radar virtual sensor, an infrared virtual sensor, and a camera virtual sensor. The input signal may include an echo signal and/or an image. For example, an echo signal may be obtained by using the millimeter wave radar virtual sensor, the laser radar virtual sensor, or the infrared virtual sensor, or a shot image may be obtained by using the camera virtual sensor. The input signal may be obtained through calculation based on a driving state $S_t$ of the first virtual object and the virtual scenario information according to a ray tracing algorithm. It may be understood that the input signal may also be obtained through calculation by using another algorithm. This is not specifically limited in this embodiment of this application.

$$S_t = \begin{bmatrix} Xi \\ Vi \\ Ai \end{bmatrix}.$$

Xi is a location of the first virtual object, Vi is a speed of the first virtual object, and Ai is an acceleration of the first virtual object. It may be understood that a status of the first virtual object may further include another variable. This is not specifically limited in this embodiment of this application.

It may be understood that each input signal is in a one-to-one correspondence with each virtual sensor. For example, an echo input signal A may be obtained by using the millimeter wave radar virtual sensor, an echo input signal B may be obtained by using the laser radar virtual sensor, and an image input signal C may be obtained by using the camera virtual sensor.

In addition, when the plurality of input signals are obtained by using the input signal emulator 200, the plurality of input signals may be further synchronized, to ensure that the input signal emulator 200 can simultaneously obtain input signals obtained by the plurality of virtual sensors for a same scenario.

Further, when the sensor emulator 300 processes the plurality of input signals, a simulation processing time Tf is generated. When a real sensor processes the input signal, a real processing time Tz is generated. It may be understood that, because the virtual sensor performs emulation on the real sensor, and is different from the real sensor, the simulation processing time Tf generated by the virtual sensor is different from the real processing time Tz generated by the real sensor. For example, the simulation processing time Tf may be greater than or equal to the real processing time Tz, or the simulation processing time Tf may also be less than or equal to the real processing time Tz. When the simulation processing time Tf is inconsistent with the real processing time Tz, delay compensation may be performed on the input signal in the input signal emulator 200, so that the simulation test can better simulate a real scenario. A delay refers to a difference between the simulation processing time Tf and the real processing time Tz.

Therefore, the input signal emulator 200 may further obtain a simulation processing time Tf of each virtual sensor in the sensor emulator 300. The simulation processing time Tf is in a one-to-one correspondence with the virtual sensor. For example, a simulation processing time Tf1 of the millimeter wave radar virtual sensor, a simulation processing time Tf2 of the laser radar virtual sensor, a simulation processing time Tf3 of the camera virtual sensor, and the like may be obtained. Then, the real processing time Tz of the real sensor corresponding to the virtual sensor may be further obtained. The real processing time Tz is in a one-to-one correspondence with the real sensor. For example, a real processing time Tz1 of a millimeter wave radar real sensor, a real processing time Tz2 of a laser radar real sensor, a real processing time Tz3 of a camera real sensor, and the like may be obtained.

Then the input signal emulator 200 may compare the simulation processing time Tf of each virtual sensor with the corresponding real processing time Tz.

If the simulation processing time Tf<the real processing time Tz, a first input signal may be obtained through emulation based on the current state St of the first virtual object, and sending of the first input signal corresponding to the virtual sensor is delayed, where the delay=Tz-Tf. For example, it is assumed that the simulation processing time Tf of the laser radar virtual sensor is 5 ms, and the real processing time Tz of the laser radar real sensor is 10 ms. In this case, a first input signal corresponding to the laser radar virtual sensor may be sent after a delay of Tz-Tf=10-5=5 ms. Therefore, the simulation processing time may be matched with the processing time of the real sensor, thereby improving simulation test accuracy.

If the simulation processing time Tf>the real processing time Tz, that is, a processing time of the virtual sensor is longer than the processing time of the real sensor, a delay is caused. Therefore, the delay needs to be compensated. During specific implementation, prediction is performed on the driving state of the first virtual object, so that the input signal emulator 200 may perform emulation based on a prediction driving state, to obtain a second input signal. The second input signal may be a prediction input signal obtained after a Tf-Tz time period. The prediction may be performed by using a Kalman filtering method, or may be performed by using another prediction method. This is not specifically limited in this embodiment of this application.

For example, it is assumed that the driving state of the first virtual object at the moment t is $S_t$, where

$$S_t = \begin{bmatrix} Xi \\ Vi \\ Ai \end{bmatrix}.$$

Xi is the location of the first virtual object, Vi is the speed of the first virtual object, and Ai is the acceleration of the first virtual object. It may be understood that the status of the first virtual object may further include another variable. This is not specifically limited in this embodiment of this application. In this case, a prediction driving state of the first virtual object at a moment t+T is $S_{t+T}=Fi^*S_t+Bi^*Ui+Ni$, where

$$Fi = \begin{bmatrix} 1 & T & \frac{1}{2}T^2 \\ 0 & 1 & T^2 \\ 0 & 0 & 1 \end{bmatrix},$$

$$Bi = \begin{bmatrix} 0 \\ 0 \\ 1 \end{bmatrix},$$

and

$$Ui = \Delta Ai.$$

Ni is a status prediction noise. In this way, the driving state of the first virtual object at a future moment can be predicted. Then, based on the driving state of the first virtual object at the future moment, the input signal emulator 300 may perform emulation on the input signal, to obtain the second input signal.

For example, it is assumed that the simulation processing time of the millimeter wave radar virtual sensor is Tf1=10 ms, that is, the millimeter wave radar virtual sensor needs to process an input signal for 10 ms, to obtain a first input signal of the millimeter wave radar; or the real processing time of the millimeter wave radar real sensor is Tz1=5 ms, that is, the millimeter wave radar real sensor needs to process an input signal for 5 ms, to obtain a first input signal of the millimeter wave radar. The simulation processing time of the laser radar virtual sensor is Tf2=12 ms, that is, the laser radar virtual sensor needs to process an input signal for 10 ms, to obtain a first input signal of the laser radar; or the real processing time of the laser radar real sensor is Tz2=8 ms, that is, the laser radar real sensor needs to process an input signal for 5 ms, to obtain a first input signal of the laser radar. Because a simulation delay Ty1=Tf1 - Tz1=10 - 5=5 ms of the millimeter wave radar virtual sensor, and a simulation delay Ty2=the simulation processing time Tf2 - Tz2=12 - 8=4 ms of the laser radar virtual sensor, that is, Ty1>Ty2, prediction may be performed on the driving state of the first virtual object based on a maximum simulation delay (for example, Ty1). Based on the prediction driving state, emulation is separately performed by using the millimeter wave radar virtual sensor and the laser radar virtual sensor, to obtain a second input signal of the millimeter wave radar and a second input signal of the laser radar. In this way, it can be ensured that effective delay compensation can be obtained for all the first input signals.

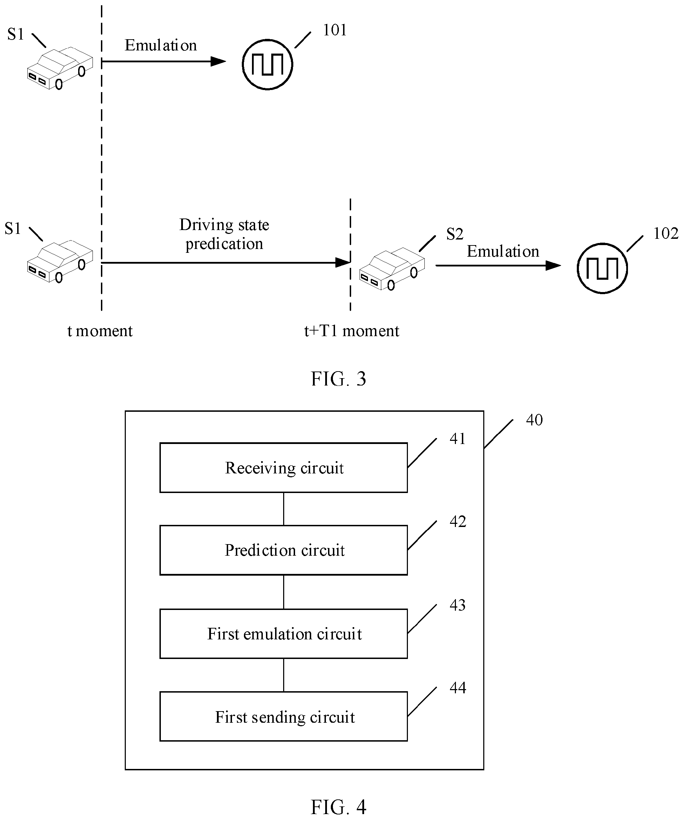

The millimeter wave radar virtual sensor is used as an example for description. FIG. 3 is a schematic diagram of predicting a second input signal. As shown in FIG. 3, the driving state of the first virtual object at the moment t is S1, and the millimeter wave radar virtual sensor on the first virtual object may obtain an input signal 101 through emulation at the moment t based on the driving state S1. Then, prediction is performed on the driving state of the first virtual object at the moment t+T1, so that the driving state of the first virtual object at the moment t+T1 is S2, where T1 is a delay, that is, a difference between the simulation processing time Tf1 of the millimeter wave radar virtual sensor and the real processing time Tz1 of the millimeter wave radar real sensor. The millimeter wave radar virtual sensor may obtain the second input signal 102 through emulation at the moment t+T 1 based on the driving state S2, so that prediction of the second input signal 102 can be completed, and delay compensation for the input signal can be completed.

It may be understood that the laser radar virtual sensor may also predict the input signal of the laser radar in the manner in FIG. 3, to obtain the second input signal of the laser radar. Details are not described herein again.

Optionally, after completing delay compensation for the input signal, the input signal emulator 200 may further correct a simulation delay of each virtual sensor. The millimeter wave radar virtual sensor and the laser radar virtual sensor are used as an example. After delays of the millimeter wave radar virtual sensor and the laser radar virtual sensor are compensated for, because a delay compensation time of the laser radar virtual sensor is a delay compensation time of the millimeter wave radar virtual sensor, for example, the simulation delay Ty2=Tf2-Tz2=12-8=4 ms of the laser radar virtual sensor, but the delay compensation time of the laser radar virtual sensor is 5 ms, the delay compensation time of the laser radar virtual sensor does not match with the simulation delay Ty2 of the laser radar virtual sensor. In this case, the input signal emulator 200 may send the second input signal predicted by the laser radar after a delay T2, so that an accumulated time of the delay T2 and the simulation processing time is corresponding to the predicted second input signal, thereby emulating performance of the real sensor T2 is a difference between a delay compensation time and a simulation delay. For example, it is assumed that the delay compensation time of the laser radar virtual sensor is 5 ms, and the simulation delay of the laser radar virtual sensor is 4 ms. In this case, T2=Delay compensation time-Simulation delay=5-4=1 ms. That is, the second output signal of the laser radar is sent after a delay of 1 ms. The real processing time of the laser radar real sensor is Tz2=8 ms, and the delay compensation time of the laser radar virtual sensor is 5 ms, that is, the second input signal obtained after Tz2+5=8+5=13 ms is predicted. However, the simulation processing time of the laser radar virtual sensor is Tf2=12 ms. Therefore, the second input signal may be sent after a delay of 13-12=1 ms, so that it can be ensured that the predicted second input signal matches with the simulation processing time of the sensor emulator 300.

Step 104: The input signal emulator 200 sends the plurality of input signals to the sensor emulator 300.

Specifically, after obtaining the plurality of input signals of the first virtual object, the input signal emulator 200 may send the plurality of input signals to the sensor emulator 300. The input signals may include the first input signal and/or the second input signal.

Step 105: The sensor emulator 300 processes the plurality of input signals, and outputs a plurality of output signals.

Specifically, after receiving the plurality of input signals sent by the input signal emulator 200, the sensor emulator 300 may process the plurality of input signals, to obtain the plurality of output signals. A processing process may be performed based on a frontend model of the virtual sensor (for example, Y=G*X+N+I) and a preset algorithm of the virtual sensor.

It should be noted that each virtual sensor may use a different preset frontend model. A specific implementation of the frontend model is not specially limited in this embodiment of this application.

It may be understood that each input signal is in a one-to-one correspondence with each output signal. For example, the echo input signal A obtained by the millimeter wave radar virtual sensor may be input into a frontend model of the millimeter wave radar virtual sensor for processing by using a preset millimeter wave radar sensor algorithm, to obtain an echo output signal A. Alternatively, the echo input signal B obtained by the laser radar virtual sensor may be input into a frontend model of the laser radar virtual sensor for processing by using a preset laser radar sensor algorithm, to obtain an echo output signal B. Alternatively, the image input signal C obtained by the camera virtual sensor is input into a frontend model of the camera virtual sensor for processing by using a preset camera sensor algorithm, to obtain an image output signal C.

Step 106: Send the plurality of output signals to the digital emulator 400.

Specifically, after processing the plurality of input signals to obtain the plurality of output signals, the sensor emulator 300 may send the plurality of output signals to the digital emulator 400.

Step 107: The digital emulator 400 receives the plurality of output signals for processing, and sends the plurality of output signals to the driving system 500.

Specifically, the digital emulator 400 may receive an output signal that is corresponding to each virtual sensor and sent by the sensor emulator 300. To test driving performance of the real vehicle, the digital emulator 400 may further send the foregoing plurality of output signals to the driving system 500 of the real vehicle.

Step 108: The driving system 500 determines a driving decision based on the plurality of output signals.

Specifically, after receiving the plurality of output signals sent by the digital emulator 400, the driving system 500 makes the driving decision. The driving decision may include operations such as accelerating, decelerating, braking, and turning, or may include another driving decision. This is not specifically limited in this embodiment of this application.

Step 109: Send the driving decision to the power system emulator 600.

Step 110: The power system emulator 600 emulates a driving state St' of the real vehicle based on the driving decision.

Specifically, the driving state St' is corresponding to the driving decision. For example, if the driving decision is accelerating, the driving state of the real vehicle emulated by the power system emulator 600 is accelerating driving; or if the driving decision is braking, the driving state of the real vehicle emulated by the power system emulator 600 is a stopping state after braking.

Step 111: Feed back the driving state St' to the virtual scenario emulator 100, to enable the virtual scenario emulator 100 to update the driving state St of the first virtual object based on St'.

Specifically, after obtaining the driving state St', the power system emulator 600 may feed back the driving state St' to the virtual scenario emulator 100, to enable the virtual scenario emulator 100 update the driving state St of the first virtual object based on St'. For example, following a vehicle is used as an example. It is assumed that a test vehicle (the first virtual object) follows another vehicle (the second virtual object), to test autonomous driving performance of the first virtual object. After the second virtual object brakes, a distance between the first virtual object and the second virtual object becomes closer. By analyzing sensor data (for example, the second output signal) obtained by the virtual sensor on the first virtual object, a driving decision (for example, the driving system 500 determines to brake) may be determined, and the braking decision may be fed back to the first virtual object, thereby completing an emulation test of an entire system.

Step 112: The virtual scenario emulator 100 updates the driving state of the first virtual object based on the driving state St'.

In this embodiment of this application, prediction is performed on a driving state of a to-be-tested object based on a delay between a simulation sensor and the real sensor. Therefore, the delay is compensated for. This can effectively resolve a delay problem caused by the simulation sensor in a digital scenario simulation test, and behavior and performance of a plurality of sensors can be accurately and synchronously simulated in the digital scenario emulator.

FIG. 4 is a schematic diagram of a structure of an embodiment of a simulation test apparatus according to this application. As shown in FIG. 4, the simulation test apparatus 40 is applied to an input signal emulator. The input signal emulator is located in an autonomous driving test architecture, the autonomous driving test architecture further includes a virtual scenario emulator and a sensor emulator, the virtual scenario emulator is configured to emulate a virtual scenario, the virtual scenario includes a to-be-tested virtual object, the to-be-tested virtual object includes a first driving state and a plurality of virtual sensors, and the apparatus may include a receiving circuit 41, a prediction circuit 42, a first emulation circuit 43, and a first sending circuit 44.

The receiving circuit 41 is configured to obtain a processing delay of each virtual sensor.

The prediction circuit 42 is configured to: determine whether each processing delay meets a preset condition; and if any processing delay meets the preset condition, predict the first driving state based on the processing delay to obtain a second driving state.

The first emulation circuit 43 is configured to perform emulation based on each second driving state by using a virtual sensor corresponding to the processing delay, to obtain one or more first input signals. Each first input signal is in a one-to-one correspondence with each virtual sensor.

The first sending circuit 44 is configured to send the one or more first input signals to the sensor emulator

In a possible implementation, the first emulation circuit 43 is further configured to perform synchronous emulation by using the plurality of virtual sensors that separately correspond to the processing delays, to obtain the plurality of first input signals.

In a possible implementation, the processing delay is determined by a difference between a first processing time and a second processing time. The first processing time is a processing time of the virtual sensor in the sensor emulator, and the second processing time is a preset real processing time of a real sensor corresponding to the virtual sensor.

In a possible implementation, the apparatus 40 further includes a second emulation circuit 45 and a second sending circuit 46.

The second emulation circuit 45 is configured to: if any processing delay does not meet the preset condition, perform emulation based on the first driving state by using the virtual sensor corresponding to the processing delay, to obtain a second input signal.

The second sending circuit 46 is configured to delay the sending one or more second input signals to the sensor emulator based on the processing delay.

In a possible implementation, the first input signal or the second input signal is obtained through emulation by the input signal emulator according to a ray tracing algorithm at least one GPU according to a ray tracing algorithm.

In a possible implementation, the first driving state includes a first location, a first speed, and a first acceleration of the to-be-tested virtual object at a moment t, and the prediction circuit is further configured to predict the first driving state of the to-be-tested virtual object based on the processing delay by using a Kalman filtering method, to obtain the second driving state. The second driving state includes a second location, a second speed, and a second acceleration of the to-be-tested virtual object at t+T, and T is the processing delay.

It should be understood that division of the modules of the simulation test apparatus shown in FIG. 4 is merely logical function division. During actual implementation, the modules may be all or partially integrated into a physical entity, or may be physically separated. In addition, the modules may be all implemented in a form of software invoked by a processing element or may be implemented in a form of hardware. Alternatively, a part of modules may be implemented in a form of software invoked by a processing element, and another part of modules are implemented in a form of hardware. For example, a detection module may be a separately disposed processing element, or may be integrated into a chip of an electronic device for implementation. Implementations of other modules are similar to the implementation of the detection module. In addition, all or some of the modules may be integrated together, or may be implemented independently. In an implementation process, steps in the foregoing methods or the foregoing modules can be implemented by using a hardware integrated logical circuit in the processing element, or by using instructions in a form of software.

For example, the foregoing modules may be one or more integrated circuits configured to implement the foregoing method, for example, one or more application-specific integrated circuits (Application-Specific Integrated Circuits, ASICs for short below), one or more digital microprocessors (Digital Signal Processors, DSPs for short below), or one or more field programmable gate arrays (Field Programmable Gate Arrays, FPGAs for short below). For another example, the modules may be integrated together, and implemented in a form of a system-on-a-chip (System-On-a-Chip, SOC for short below).

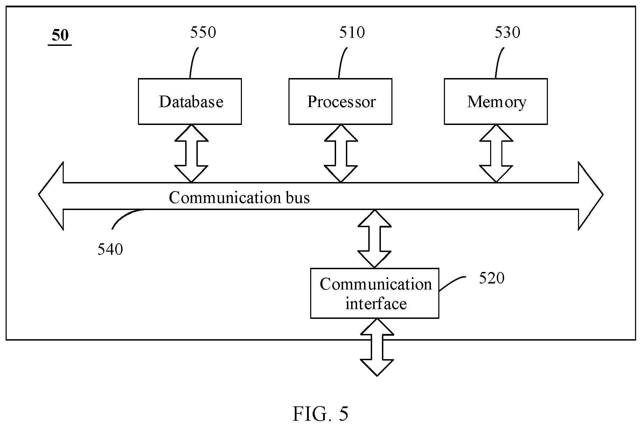

FIG. 5 is a schematic diagram of a structure of an embodiment of an electronic device 50 according to this application. The electronic device 50 may be the foregoing input signal emulator 200. As shown in FIG. 5, the electronic device 50 may be a data processing device, or may be a circuit device built in a data processing device. The electronic device 50 may be configured to perform functions/steps in the methods provided in the embodiments shown in FIG. 1 to FIG. 3 of this application.

As shown in FIG. 5, the electronic device 50 is represented in a form of a general-purpose computing device.

The electronic device 50 may include one or more processors 510, a communication interface 520, a memory 530, a communication bus 540 that connects different system components (including the memory 530 and the processor 510), a database 550, and one or more computer programs.

The foregoing one or more computer programs are stored in the foregoing memory, the foregoing one or more computer programs include instructions, and when the foregoing instructions are executed by the foregoing electronic device, the foregoing electronic device is enabled to perform the following steps:

obtaining a processing delay of each virtual sensor;
determining whether each processing delay meets a preset condition;
if any processing delay meets a preset condition, predicting a first driving state based on the processing delay to obtain a second driving state;
performing emulation based on each second driving state by using a virtual sensor corresponding to the processing delay, to obtain one or more first input signals, where each first input signal is in a one-to-one correspondence with each virtual sensor; and
sending the one or more first input signals to a sensor emulator.

In a possible implementation, when the instructions are executed by the electronic device, that the electronic device performs the step of performing emulation by using a virtual sensor corresponding to the processing delay, to obtain one or more first input signals includes: performing synchronous emulation by using a plurality of virtual sensors that separately correspond to the processing delays, to obtain the plurality of first input signals.

In a possible implementation, the processing delay is determined by a difference between a first processing time and a second processing time. The first processing time is a processing time of the virtual sensor in the sensor emulator, and the second processing time is a preset real processing time of a real sensor corresponding to the virtual sensor.

In a possible implementation, when the instructions are executed by the electronic device, the electronic device is enabled to further perform the following steps:

if any processing delay does not meet the preset condition, performing emulation based on the first driving state by using the virtual sensor corresponding to the processing delay, to obtain a second input signal; and
delaying sending of one or more second input signals to the sensor emulator based on the processing delay.

In a possible implementation, the sensor emulator is configured to receive the first input signal or the second input signal, and perform calculation based on a preset frontend model and a preset algorithm of the virtual sensor to obtain an output signal. The preset frontend model of the virtual sensor is Y=G*X+N+I, where Y is the output signal of the frontend model, X is the first input signal or the second input signal, G is a gain of a frontend of the virtual sensor, N is a noise of the frontend of the virtual sensor, and I is interference introduced by the frontend of the virtual sensor.

In a possible implementation, a virtual scenario is obtained through emulation by a virtual scenario emulator by using at least one CPU and/or at least one GPU, and the first input signal or the second input signal is obtained through emulation by an input signal emulator according to a ray tracing algorithm at least one GPU according to a ray tracing algorithm.

In a possible implementation, the first driving state includes a first location, a first speed, and a first acceleration of a to-be-tested virtual object at a moment t, and when the instructions are executed by the electronic device, the electronic device is enabled to perform the step of predicting a first driving state based on the processing delay to obtain a second driving state includes:

predicting the first driving state of the to-be-tested virtual object based on the processing delay by using a Kalman filtering method, to obtain the second driving state, where the second driving state includes a second location, a second speed, and a second acceleration of the to-be-tested virtual object at t+T, and T is the processing delay.

In a possible implementation, an autonomous driving test architecture further includes a digital emulator, a driving system, and a power system emulator. The digital emulator is configured to receive an output signal sent by the sensor emulator, and send the output signal to the driving system; the driving system is configured to determine a driving decision based on the output signal; and the power system emulator is configured to perform emulation on the driving decision to obtain a third driving state, and feed back the third driving state to the virtual scenario emulator, to enable the to-be-tested virtual object to update the first driving state based on the third driving state.

In a possible implementation, the virtual sensor includes at least one of a millimeter wave radar virtual sensor, a laser radar virtual sensor, an infrared virtual sensor, or a camera virtual sensor.

It may be understood that an interface connection relationship between the modules shown in this embodiment of the present invention is merely an example for description, and does not constitute a limitation on the structure of the electronic device 50. In some other embodiments of this application, the electronic device 50 may alternatively use an interface connection manner different from that in the foregoing embodiment, or a combination of a plurality of interface connection manners.

It may be understood that to implement the foregoing functions, the electronic device 50 includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

Function module division may be performed on the electronic device based on the foregoing method example in embodiments of this application. For example, the function modules may be obtained through division for corresponding functions, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

The foregoing descriptions about implementations allow a person skilled in the art to understand that, for the purpose of convenient and brief description, division of the foregoing function modules is taken as an example for illustration. During actual application, the foregoing functions can be allocated to different modules and implemented based on a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A simulation test method, applied to an input signal emulator, wherein the input signal emulator is located in an autonomous driving test architecture, the autonomous driving test architecture further comprises a virtual scenario emulator and a sensor emulator, the virtual scenario emulator is configured to emulate a virtual scenario, the virtual scenario comprises a to-be-tested virtual object, the to-be-tested virtual object comprises a first driving state and a plurality of virtual sensors, and the method comprises:

   obtaining a processing delay of each virtual sensor;
   determining whether each processing delay meets a preset condition;
   if any processing delay meets the preset condition, predicting the first driving state based on the processing delay to obtain a second driving state;
   performing emulation based on each second driving state by using a virtual sensor corresponding to the processing delay, to obtain one or more first input signals, wherein each first input signal is in a one-to-one correspondence with each virtual sensor; and
   sending the one or more first input signals to the sensor emulator

2. The method according to claim 1, wherein the performing emulation by using a virtual sensor corresponding to the processing delay, to obtain one or more first input signals comprises:
   performing synchronous emulation by using the plurality of virtual sensors that separately correspond to the processing delays, to obtain the plurality of first input signals.

3. The method according to claim 1 or 2, wherein the processing delay is determined by a difference between a first processing time and a second processing time, wherein the first processing time is a processing time of the virtual sensor in the sensor emulator, and the second processing time is a preset real processing time of a real sensor corresponding to the virtual sensor.

4. The method according to any one of claims 1 to 3, wherein the method further comprises:

   if any processing delay does not meet the preset condition, performing emulation based on the first driving state by using the virtual sensor corresponding to the processing delay, to obtain a second input signal; and
   delaying the sending of one or more second input signals to the sensor emulator based on the processing delay.

5. The method according to claim 4, wherein the sensor emulator is configured to receive the first input signal or the second input signal, and perform calculation based on a preset frontend model and a preset algorithm of the virtual sensor to obtain an output signal, wherein the preset frontend model of the virtual sensor is $Y=G*X+N+I$, wherein Y is the output signal of the frontend model, X is the first input signal or the second input signal, G is a gain of a frontend of the virtual sensor, N is a noise of the frontend of the virtual sensor, and I is interference introduced by the frontend of the virtual sensor.

6. The method according to claim 4, wherein the virtual scenario is obtained through emulation by the virtual scenario emulator by using at least one CPU and/or at least one GPU, and the first input signal or the second input signal is obtained through emulation by the input signal emulator according to a ray tracing algorithm at least one GPU according to a ray tracing algorithm.

7. The method according to claim 1, wherein the first driving state comprises a first location, a first speed, and a first acceleration of the to-be-tested virtual object at a moment t, and the predicting the first driving state based on the processing delay to obtain a second driving state comprises:
   predicting the first driving state of the to-be-tested virtual object based on the processing delay by using a Kalman filtering method, to obtain the second driving state, wherein the second driving state comprises a second location, a second speed, and a second acceleration of the to-be-tested virtual object at t+T, and T is the processing delay.

8. The method according to claim 1, wherein the autonomous driving test architecture further comprises a digital emulator, a driving system, and a power system emulator, wherein the digital emulator is configured to receive an output signal sent by the sensor emulator, and send the output signal to the driving system; the driving system is configured to determine a driving decision based on the output signal; and the power system emulator is configured to perform emulation on the driving decision to obtain a third driving state, and feed back the third driving state to the virtual scenario emulator, to enable the to-be-tested virtual object to update the first driving state based on the third driving state.

9. The method according to any one of claims 1 to 8, wherein the virtual sensor comprises at least one of a millimeter wave radar virtual sensor, a laser radar virtual sensor, an infrared virtual sensor, or a camera virtual sensor.

10. A simulation test apparatus, applied to an input signal emulator, wherein the input signal emulator is located in an autonomous driving test architecture, the autonomous driving test architecture further comprises a virtual scenario emulator and a sensor emulator, the virtual scenario emulator is configured to emulate a virtual scenario, the virtual scenario comprises a to-be-tested virtual object, the to-be-tested virtual object comprises a first driving state and a plurality of virtual sensors, and the apparatus comprises:

a receiving circuit, configured to obtain a processing delay of each virtual sensor;
a prediction circuit, configured to: determine whether each processing delay meets a preset condition; and if any processing delay meets the preset condition, predict the first driving state based on the processing delay to obtain a second driving state;
a first emulation circuit, configured to perform emulation based on each second driving state by using a virtual sensor corresponding to the processing delay, to obtain one or more first input signals, wherein each first input signal is in a one-to-one correspondence with each virtual sensor; and
a first sending circuit, configured to send the one or more first input signals to the sensor emulator

11. The apparatus according to claim 10, wherein the first emulation circuit is further configured to perform synchronous emulation by using the plurality of virtual sensors that separately correspond to the processing delays, to obtain the plurality of first input signals.

12. The apparatus according to claim 10 or 11, wherein the processing delay is determined by a difference between a first processing time and a second processing time, wherein the first processing time is a processing time of the virtual sensor in the sensor emulator, and the second processing time is a preset real processing time of a real sensor corresponding to the virtual sensor.

13. The apparatus according to any one of claims 10 to 12, wherein the apparatus further comprises:

a second emulation circuit, configured to: if any processing delay does not meet the preset condition, perform emulation based on the first driving state by using the virtual sensor corresponding to the processing delay, to obtain a second input signal; and
a second sending circuit, configured to delay the sending of one or more second input signals to the sensor emulator based on the processing delay.

14. The apparatus according to claim 13, wherein the first input signal or the second input signal is obtained through emulation by the input signal emulator according to a ray tracing algorithm at least one GPU according to a ray tracing algorithm.

15. The apparatus according to claim 10, wherein the first driving state comprises a first location, a first speed, and a first acceleration of the to-be-tested virtual object at a moment t, and the prediction circuit is further configured to predict the first driving state of the to-be-tested virtual object based on the processing delay by using a Kalman filtering method, to obtain the second driving state, wherein the second driving state comprises a second location, a second speed, and a second acceleration of the to-be-tested virtual object at t+T, and T is the processing delay.

16. A simulation test system, comprising a virtual scenario emulator, an input signal emulator, a sensor emulator, a digital emulator, and a system synchronization module, wherein

the virtual scenario emulator is configured to emulate a virtual scenario, the virtual scenario comprises a to-be-tested virtual object, and the to-be-tested virtual object comprises a first driving state and a plurality of virtual sensors;
the input signal emulator is configured to: obtain a processing delay of each virtual sensor; determine whether each processing delay meets a preset condition; if any processing delay meets the preset condition, predict the first driving state based on the processing delay to obtain a second driving state; perform emulation based on each second driving state by using a virtual sensor corresponding to the processing delay, to obtain one or more first input signals, wherein each first input signal is in a one-to-one correspondence with each virtual sensor; and send the one or more first input signals to the sensor emulator;
the sensor emulator is configured to: receive the first input signal, and perform calculation based on a preset frontend model and a preset algorithm of the virtual sensor to obtain an output signal;
the digital emulator is configured to receive the output signal sent by the sensor emulator; and
the system synchronization module is configured to provide a synchronization clock for each of the virtual scenario emulator, the input signal emulator, the sensor emulator, and the digital emulator

**17.** The system according to claim 16, wherein the input signal emulator is further configured to perform synchronous emulation by using the plurality of virtual sensors that separately correspond to the processing delays, to obtain the plurality of first input signals.

**18.** The system according to claim 16 or 17, wherein the processing delay is determined by a difference between a first processing time and a second processing time, wherein the first processing time is a processing time of the virtual sensor in the sensor emulator, and the second processing time is a preset real processing time of a real sensor corresponding to the virtual sensor

**19.** The system according to any one of claims 16 to 18, wherein the input signal emulator is further configured to: if any processing delay does not meet the preset condition, perform emulation based on the first driving state by using the virtual sensor corresponding to the processing delay, to obtain a second input signal; and delay the sending of one or more second input signals to the sensor emulator based on the processing delay.

**20.** The system according to claim 19, wherein the sensor emulator is further configured to receive the second input signal, wherein a preset frontend model of the virtual sensor is Y=G*X+N+I, wherein Y is an output signal of the frontend model, X is the first input signal or the second input signal, G is a gain of a frontend of the virtual sensor, N is a noise of the frontend of the virtual sensor, and I is interference introduced by the frontend of the virtual sensor

**21.** The system according to claim 19, wherein the virtual scenario is obtained through emulation by the virtual scenario emulator by using at least one CPU and/or at least one GPU, and the first input signal or the second input signal is obtained through emulation by the input signal emulator according to a ray tracing algorithm at least one GPU according to a ray tracing algorithm.

**22.** The system according to claim 16, wherein the first driving state comprises a first location, a first speed, and a first acceleration of the to-be-tested virtual object at a moment t, and the input signal emulator is further configured to predict the first driving state of the to-be-tested virtual object based on the processing delay by using a Kalman filtering method, to obtain the second driving state, wherein the second driving state comprises a second location, a second speed, and a second acceleration of the to-be-tested virtual object at t+T, and T is the processing delay.

**23.** The system according to claim 16, further comprising a driving system and a power system emulator, wherein

the digital emulator is further configured to send the output signal to the driving system; the driving system is configured to determine a driving decision based on the output signal; and the power system emulator is configured to perform emulation on the driving decision to obtain a third driving state, and feed back the third driving state to the virtual scenario emulator, to enable the to-be-tested virtual object to update the first driving state based on the third driving state.

**24.** The system according to any one of claims 16 to 23, wherein the virtual sensor comprises at least one of a millimeter wave radar virtual sensor, a laser radar virtual sensor, an infrared virtual sensor, or a camera virtual sensor.

FIG. 1

Virtual scenario emulator 100

Input signal emulator 200

Sensor emulator 300

Digital emulator 400

Driving system 500

Power system emulator 600

101: Construct a virtual scenario

102: Virtual scenario information

102: Emulate obtaining a plurality of input signals

103: Plurality of input signals

104: Process the plurality of input signals, and generate a plurality of output signals

105: Plurality of output signals

106: Plurality of output signals

107: Determine a driving decision based on the plurality of output signals

108: Driving decision

109: Emulate a driving state of a real vehicle based on the driving decision

110: Feed back the driving state

111: Update the driving state

FIG. 2

S1

Emulation

101

S1

Driving state predication

S2

Emulation

102

t moment

t+T1 moment

FIG. 3

Receiving circuit 41

Prediction circuit 42

First emulation circuit 43

First sending circuit 44

40

FIG. 4

FIG. 5

**INTERNATIONAL SEARCH REPORT**

| International application No. |
| --- |
| **PCT/CN2021/132662** |

**A.    CLASSIFICATION OF SUBJECT MATTER**

G05B 17/02(2006.01)i

According to International Patent Classification (IPC) or to both national classification and IPC

**B.    FIELDS SEARCHED**

Minimum documentation searched (classification system followed by classification symbols)

G05B,G06F

Documentation searched other than minimum documentation to the extent that such documents are included in the fields searched

Electronic data base consulted during the international search (name of data base and, where practicable, search terms used)

CNKI, CNPAT, WPI, EPODOC: 华为技术有限公司, 孔红伟, 陈昌辉, 王文杰, 仿真, 测试, 模拟器, 虚拟, 场景, 传感器, 对象, 延时, 延迟, 驾驶, 车辆, 状态, emulat+, simulat+, test+, checkout, measur+, imitator, simulator, virtual, fictitious, suppositional, scene, sensor, transducer, target, object, delay, time, driv+, state, status, condition

**C.    DOCUMENTS CONSIDERED TO BE RELEVANT**

| Category* | Citation of document, with indication, where appropriate, of the relevant passages | Relevant to claim No. |
| --- | --- | --- |
| A | CN 108681264 A (CHENGDU HEZONG LIANHENG DIGITAL TECHNOLOGY CO., LTD.) 19 October 2018 (2018-10-19) description, paragraphs [0056]-[0091], and figures 1-4 | 1-24 |
| A | CN 109213126 A (ANHUI JIANGHUAI AUTOMOBILE GROUP CORP., LTD.) 15 January 2019 (2019-01-15) entire document | 1-24 |
| A | CN 110779730 A (ZHEJIANG LEAPMOTOR TECHNOLOGY CO., LTD.) 11 February 2020 (2020-02-11) entire document | 1-24 |
| A | CN 111505965 A (SHENZHEN GUODONG ZHIJIA TECHNOLOGY CO., LTD.) 07 August 2020 (2020-08-07) entire document | 1-24 |
| A | CN 108877374 A (CHANG'AN UNIVERSITY) 23 November 2018 (2018-11-23) entire document | 1-24 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 January 2022** | **22 February 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/132662** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110794712 A (SUZHOU AUTOMOTIVE RESEARCH INSTITUTE, TSINGHUA UNIVERSITY (WUJIANG)) 14 February 2020 (2020-02-14)<br>entire document | 1-24 |
| A | CN 111881520 A (GUANGZHOU WERIDE TECHNOLOGY CO., LTD. et al.) 03 November 2020 (2020-11-03)<br>entire document | 1-24 |
| A | US 2020167436 A1 (HITACHI LTD.) 28 May 2020 (2020-05-28)<br>entire document | 1-24 |

Form PCT/ISA/210 (second sheet) (January 2015)

## INTERNATIONAL SEARCH REPORT
### Information on patent family members

International application No.

**PCT/CN2021/132662**

| Patent document cited in search report | | | Publication date (day/month/year) | Patent family member(s) | | | Publication date (day/month/year) |
|---|---|---|---|---|---|---|---|
| CN | 108681264 | A | 19 October 2018 | None | | | |
| CN | 109213126 | A | 15 January 2019 | None | | | |
| CN | 110779730 | A | 11 February 2020 | None | | | |
| CN | 111505965 | A | 07 August 2020 | US | 2021394787 | A1 | 23 December 2021 |
| | | | | CN | 111505965 | B | 29 September 2020 |
| CN | 108877374 | A | 23 November 2018 | CN | 108877374 | B | 30 March 2021 |
| CN | 110794712 | A | 14 February 2020 | None | | | |
| CN | 111881520 | A | 03 November 2020 | CN | 111881520 | B | 11 January 2022 |
| US | 2020167436 | A1 | 28 May 2020 | US | 11087049 | B2 | 10 August 2021 |

Form PCT/ISA/210 (patent family annex) (January 2015)

**EP 4 250 023 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011408608X